# EUROPEAN PATENT SPECIFICATION

(11) **EP 4 352 477 B1**
(45) Date of publication and mention of the grant of the patent: **12.08.2026**
(21) Application number: 22731583.5
(22) Date of filing: 01.06.2022
(51) Int. Cl.: G01K 1/14, B65G 1/00, B65D 25/20, B65D 79/02, B65G 1/04

(54) **A STORAGE CONTAINER FOR AN AUTOMATED, GRID-BASED STORAGE AND RETRIEVAL SYSTEM**
LAGERBEHÄLTER FÜR EIN AUTOMATISIERTES, GITTERBASIERTES LAGER- UND ENTNAHMESYSTEM
RÉCIPIENT DE STOCKAGE DESTINÉ À UN SYSTÈME AUTOMATISÉ DE STOCKAGE ET DE RÉCUPÉRATION SUR GRILLES

(30) Priority: 10.06.2021 NO 20210749
(43) Date of publication of application: 17.04.2024
(73) Proprietor: AutoStore Technology AS, 5578 Nedre Vats (NO)
(72) Inventor: GILJE, Kjetil, 5585 SANDEID (NO)
(74) Representative: Kilburn & Strode LLP
(86) International application number: PCT/EP2022/064875
(87) International publication number: WO 2022/258451

(56) References cited:
- WO-A1-2020/144269
- JP-A- 2003 246 329
- KR-B1- 102 153 085

## Description

The present invention relates to a storage container for an automated, grid-based storage and retrieval system, in particular to a storage container having improved monitoring of its interior temperature. The invention further relates to an automated, grid-based storage and retrieval system comprising said storage container.

### BACKGROUND AND PRIOR ART

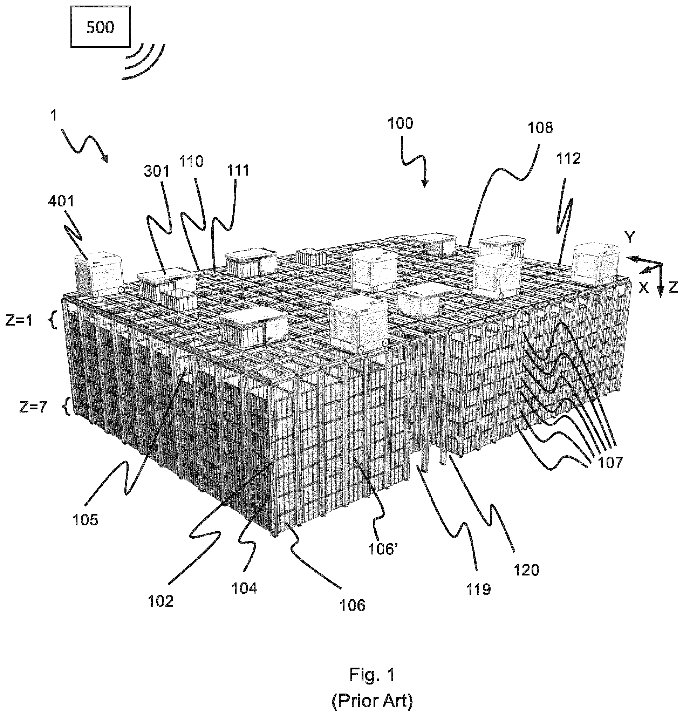

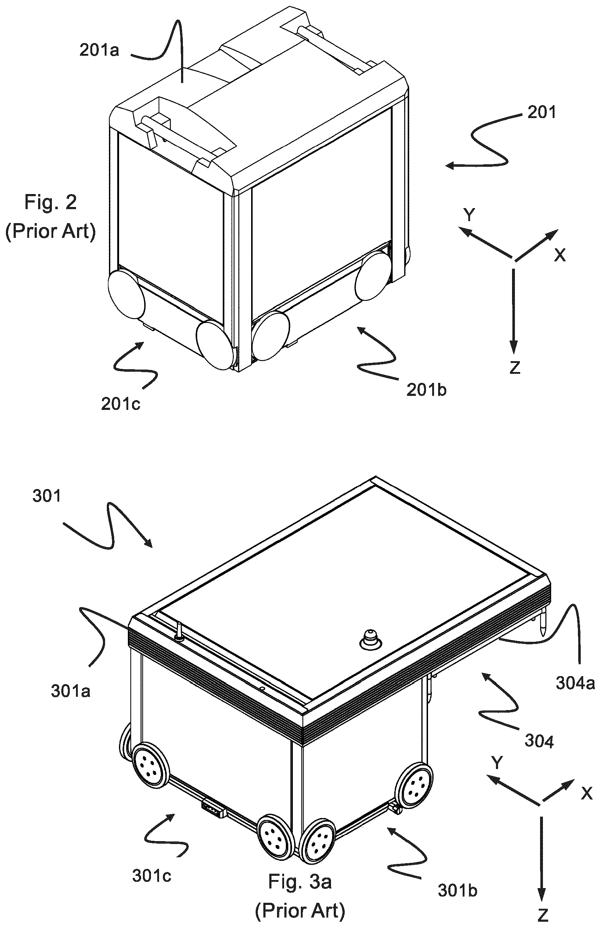

Fig. 1 discloses a prior art automated storage and retrieval system 1 with a framework structure 100 and Figs. 2, 3a-3b disclose three different prior art container handling vehicles 201, 301, 401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form container stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 301, 401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 301, 401 in a first direction *X* across the top of the frame structure 100, and a second set of parallel rails 111 arranged perpendicular to the first set of rails 110 to guide movement of the container handling vehicles 301, 401 in a second direction *Y* which is perpendicular to the first direction *X.* Containers 106 stored in the columns 105 are accessed by the container handling vehicles 301, 401 through access openings 112 in the rail system 108. The container handling vehicles 301, 401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201, 301, 401 comprises a vehicle body 201a, 301a, 401a and first and second sets of wheels 201b, 201c, 301b, 301c, 401b, 401c which enable lateral movement of the container handling vehicles 201, 301, 401 in the *X* direction and in the *Y* direction, respectively. In Figs. 2-3b, two wheels in each set are fully visible. The first set of wheels 201b, 301b, 401b is arranged to engage with two adjacent rails of the first set 110 of rails, and the second set of wheels 201c, 301c, 401c is arranged to engage with two adjacent rails of the second set 111 of rails. At least one of the sets of wheels 201b, 201c, 301b, 301c, 401b, 401c can be lifted and lowered, so that the first set of wheels 201b, 301b, 401b and/or the second set of wheels 201c, 301c, 401c can be engaged with the respective set of rails 110, 111 at any one time.

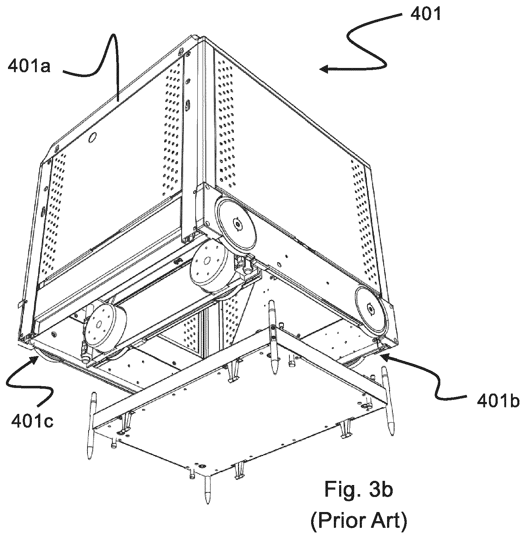

Each prior art container handling vehicle 201, 301, 401 also comprises a lifting device for vertical transportation of storage containers 106, e.g. raising a storage container 106 from, and lowering a storage container 106 into, a storage column 105. The lifting device comprises one or more gripping/engaging devices which are adapted to engage a storage container 106, and which gripping/engaging devices can be lowered from the vehicle 201, 301, 401 so that the position of the gripping/engaging devices with respect to the vehicle 201, 301, 401 can be adjusted in a third direction *Z* (visible for instance in Fig. 1) which is orthogonal the first direction *X* and the second direction *Y.* Parts of the gripping device of the container handling vehicles 301, 401 are shown in Figs. 3a and 3b indicated with reference number 304, 404. The gripping device of the container handling device 201 is located within the vehicle body 201a in Fig. 2.

Conventionally, and also for the purpose of this application, *Z*=1 identifies the uppermost layer available for storage containers below the rails 110, 111, i.e. the layer immediately below the rail system 108, *Z*=2 the second layer below the rail system 108, *Z*=3 the third layer etc. In the exemplary prior art disclosed in Fig. 1, *Z*=7 identifies the lowermost, bottom layer of storage containers. Similarly, *X=*1*...n* and *Y=*1*...n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X=*17, *Y=*1, *Z=5.* The container handling vehicles 201, 301, 401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the *X-, Y*- and *Z*-direction.

Each prior art container handling vehicle 201, 301, 401 comprises a storage compartment or space for receiving and stowing a storage container 106 when transporting the storage container 106 across the rail system 108. The storage space may comprise a cavity arranged internally within the vehicle body 201a as shown in Figs. 2 and 3b and as described in e.g. WO2015/193278A1 and WO2019/206487A1.

Fig. 3a shows an alternative configuration of a container handling vehicle 301 with a cantilever construction. Such a vehicle is described in detail in e.g. NO317366

The cavity container handling vehicles 201 shown in Fig. 2 may have a footprint that covers an area with dimensions in the X and Y directions which is generally equal to the lateral extent of a storage column 105, e.g. as is described in WO2015/193278A1.

Alternatively, the cavity container handling vehicles 401 may have a footprint which is larger than the lateral area defined by a storage column 105 as shown in Fig. 3b and as disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks; in other rail systems 108, each rail in one direction may comprise one track and each rail in the other perpendicular direction may comprise two tracks.

WO2018/146304A1. illustrates a typical configuration of rail system 108 comprising rails and parallel tracks in both *X* and *Y* direction.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201, 301, 401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or a dedicated column 105 within the framework structure 100, then picked up by any container handling vehicle and transported to a port column 119, 120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201, 301 can drop off storage containers 106 to be transported to an access or a transfer station, and the second port column 120 may be a dedicated pick-up port column where the container handling vehicles 201, 301, 401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are, once accessed, returned into the framework structure 100. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119, 120 and the access station.

If the port columns 119, 120 and the access station are located at different levels, the conveyor system may comprise a lift device with a vertical component for transporting the storage containers 106 vertically between the port column 119, 120 and the access station.

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201, 301, 401 is instructed to retrieve the target storage container 106 from its position and transport it to the drop-off port column 119. This operation involves moving the container handling vehicle 201, 301 to a location above the storage column 105 in which the target storage container 106 is positioned, retrieving the storage container 106 from the storage column 105 using the container handling vehicle's 201, 301, 401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201, 301, 401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201, 301, 401 is instructed to pick up the storage container 106 from the pick-up port column 120 and transport it to a location above the storage column 105 where it is to be stored. After storage containers 106 positioned at or above the target position within the stack 107 have been removed, the container handling vehicle 201, 301, 401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106 and the movement of the container handling vehicles 201, 301, 401 so that a desired storage container 106 can be delivered to the desired location at the desired time without the container handling vehicles 201, 301, 401 colliding with each other, the automated storage and retrieval system 1 comprises a control system 500 (shown in Fig. 1) which typically is computerized and which typically comprises a database for keeping track of the storage containers 106.

WO2016166354 describes a storage system where goods are stored in stacked bins. A grid network of tracks on which load handling devices run is provided above the stacks. The bins may inter alia be provided with heating and/or cooling devices and various sensing means, including temperature sensors. In WO2016166354, these heating and/or cooling devices as well as sensing means are positioned internally in the bin. Obviously, this entails reduced storing capacity of the bin. In addition, said devices and sensing means, when positioned internally in the bin, could interfere with the stored items, in particular during loading and unloading of the bin.

Storage systems similar to that disclosed in WO2016166354 are also disclosed in WO2018073392A1 and WO2020234444A1.

JPH08198383A discloses a refrigerated container covered with a heat insulating material and a built-in electric cooler. The container is provided with a power receiver that can receive power from a power supply provided in the container rack and transmit power to the cooler by being positioned and placed on the container. The power receiver is provided in the bottom surface of the container.

WO2020/144269A describes, according to its abstract, a growing system where living organisms are grown within containers in stacks. Above the stacks run load handling devices. The load handling devices take containers from the stacks and deposit them at service area stations where goods may be picked out. The containers may be provided with one or more of the following services: power, power control, heating, lighting, cooling, sensing means, and data logging means.

In view of the above it is desirable to provide a storage container that solves or at least mitigates one or more of the aforementioned problems belonging to the prior art.

### SUMMARY OF THE INVENTION

The present invention is set forth and characterized in the independent claim, while the dependent claims describe other characteristics of the invention.

First aspect of the invention relates to a storage container for an automated, grid-based storage and retrieval system, as defined in claim 1.

By providing a storage container in accordance with the first aspect of the invention, it becomes possible to determine temperature inside the storage container without opening the lid of the storage container. Alternatively, in case the storage container is lidless, it becomes possible to obtain a read of the interior temperature without removing superpositioned storage containers. Clearly, this entails simplified handling of the storage containers. In the same context, energy savings are achieved as every opening of the storage container results in temperature increase in the container itself in consequence of the cooled interior air exiting the container.

Second aspect of the invention relates to an automated, grid-based storage and retrieval system comprising above-defined storage container.

For the sake of brevity, advantages discussed above in connection with the storage container may even be associated with the grid-based storage and retrieval system and are not further discussed.

The relative terms "upper", "lower", "below", "above", "higher" etc. shall be understood in their normal sense and as seen in a Cartesian coordinate system. When mentioned in relation to a rail system, "upper" or "above" shall be understood as a position closer to the surface rail system (relative to another component), contrary to the terms "lower" or "below" which shall be understood as a position further away from the rail system (relative another component).

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3a is a perspective view of a prior art container handling vehicle having a cantilever for carrying storage containers underneath.
Fig. 3b is a perspective view, seen from below, of a prior art container handling vehicle having an internally arranged cavity for carrying storage containers therein.
Fig. 4a shows a first part for inserting in a side wall of a storage container according to an embodiment of the present invention.
Fig. 4b shows a storage container for accommodating the first part according to an embodiment of the present invention.
Fig. 5a shows a second part for inserting in a side wall of a storage container according to an embodiment of the present invention.
Fig. 5b shows a storage container for accommodating the second part according to an embodiment of the present invention.
Fig. 6 shows a second part according to an embodiment of the present invention, said section comprising tubes for a fluidic refrigerant.
Fig. 7a shows a storage container according to an embodiment of the present invention, a side wall of the storage container comprising an air inlet and an air outlet.
Fig. 7b shows a storage container according to an embodiment of the present invention, an internal air tube being associated with the air inlet and the air outlet of Fig. 7a.
Fig. 7c shows stacked storage containers according to an embodiment of the present invention, wherein external piping extends to the air inlet and the air outlet of Fig. 7a.
Fig. 8a shows a storage container according to an embodiment of the present invention, wherein a side wall of the storage container comprises at least one light inlet and a light outlet.
Fig. 8b shows a storage container according to an embodiment of the present invention, wherein a light guide extending in a longitudinal direction of the storage container is associated with each light inlet of Fig. 8a.
Fig. 9 shows a bracket extending between two adjacent storage columns, said bracket being part of an automated, grid-based storage and retrieval system.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3b, i.e. a number of upright members 102, wherein the framework structure 100 also comprises a first, upper rail system 108 in the X direction and Y direction.

The framework structure 100 further comprises storage compartments in the form of storage columns 105 provided between the members 102 where storage containers 106 are stackable in stacks 107 within the storage columns 105.

The framework structure 100 can be of any size. In particular, it is understood that the framework structure can be considerably wider and/or longer and/or deeper than disclosed in Fig. 1. For example, the framework structure 100 may have a horizontal extent of more than 700x700 columns and a storage depth of more than twelve containers.

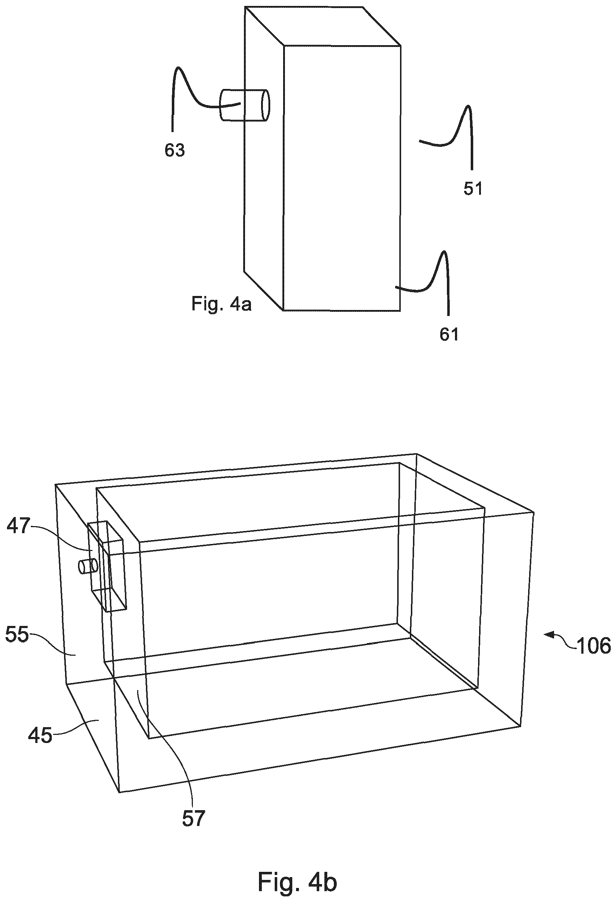

Various aspects of the present invention will now be discussed in more detail with reference to Figs. 4a-9.

Fig. 4a shows a first part 51 for inserting in a side wall of a storage container according to an embodiment of the present invention, whereas Fig. 4b shows a storage container 106 for accommodating said first part according to an embodiment of the present invention.

As seen in Fig. 4b, a side wall 45 of the storage container 106 comprises a first recess 47. The shape of the recess corresponds to the shape of the first part 51 of Fig. 4a. In the shown embodiment, the first recess 47 extends throughout the thickness of the side wall 45 of the storage container 106. According to other embodiments useful for understanding the presently claimed invention, the first recess 47 is not a through-recess. The first recess 47 receives the first part 51 shown in Fig. 4a, said part for gauging information regarding temperature in the interior of the storage container 106. When said first part 51 is placed in the first recess 47, gauged information is readable from the exterior of the storage container 106. Hereby, it becomes possible to determine temperature inside the storage container 106 without opening the lid (not shown in Fig. 4b) of the storage container 106. Alternatively, in case the storage container is lidless, it becomes possible to obtain a read of the interior temperature without removing superpositioned storage containers. This entails simplified handling of the storage containers. In the same context, energy savings are achieved as every opening of the storage container results in temperature increase in the container itself in consequence of the cooled interior air exiting the container.

The first part 51 comprises a first section 61 and a second section 63 protruding, when the first part 51 is inserted in the first recess 47, from the exterior-facing surface of said first section 61.

According to other embodiments useful for understanding the presently claimed invention, a read of the gauged information regarding temperature in the interior of the storage container 106 is obtained without physical contact with the first part 51, more precisely without contact with the second, protruding section 63 of the first part 51. More specifically, IR-technology may be used to obtain a read. In a related embodiment useful for understanding the presently claimed invention, the second protruding section 63 may be made in a material the colour of which is temperature-dependent. This opens for use of simple image recording device to obtain a temperature read. In yet another related embodiment useful for understanding the presently claimed invention, an RFID-technology may be used to obtain a read. In such an embodiment, the first recess 47 need not be a through-recess.

According to the invention, a read of the gauged information regarding temperature in the interior of the storage container 106 is obtained through physical contact with the first part 51, for instance by means of a suitable sensor brought in contact with the second protruding section 63.

Still with reference to Figs. 4a-4b, when said first part 51 is placed in the first recess 47, it is arranged flush with the surface 55 of the side wall 45 facing the exterior of the storage container 106. Accordingly, there are no protruding portions to disturb container handling, in particular the vertical displacement of storage containers 106 by means of container handling vehicles shown in Figs. 1-3b.

In a related context, said first part 51 of Fig. 4a is also arranged flush with the surface 57 of the side wall 45 facing the interior of the storage container 106. This eliminates risk of interference when items are being loaded into the container or unloaded from the container. Also, the entire interior volume of the storage container 106 is a useful volume.

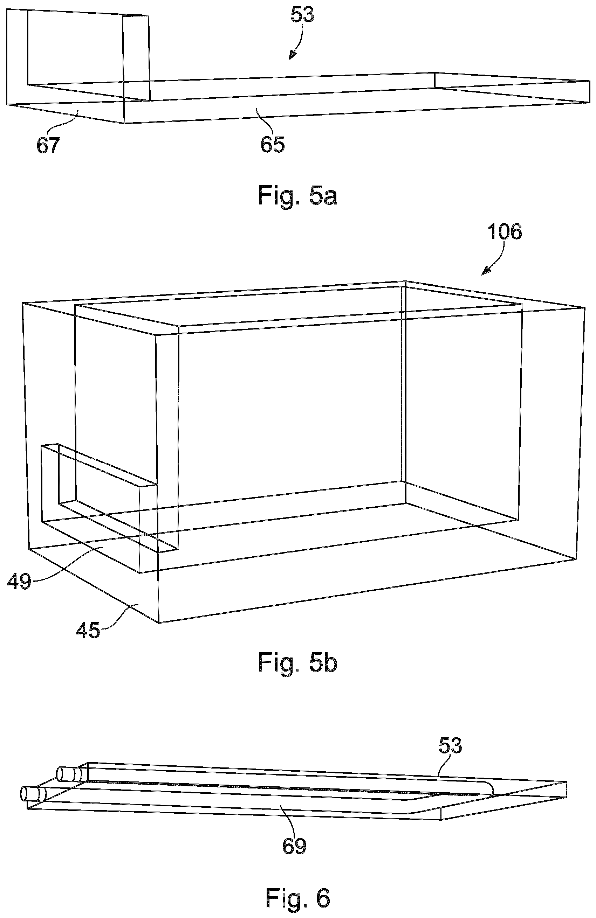

Fig. 5a shows a second part 53 for inserting in a side wall of a storage container according to an embodiment of the present invention, whereas Fig. 5b shows a storage container 106 for accommodating the second part of Fig. 5a according to an embodiment of the present invention.

As seen in Fig. 5b, a side wall 45 of the storage container 106 comprises a second recess 49. For the sake of simplicity, the first recess is not shown in Fig. 5b. In the shown embodiment, the second recess 49 extends throughout the thickness of the side wall 45 of the storage container 106. The second recess 49 receives at least a portion of the second part 53 shown in Fig. 5a. When said portion of the second part 53 is placed in the second recess 49, the second part 53 is in communication with the interior of the storage container 106. Once in position, the second part 53 comprises means for transferring energy between the second part 53 and the interior of the storage container 106 such that the temperature in the interior of the storage container may be regulated. Consequently, it becomes possible to introduce or remove heat from the storage container 106, hereby regulating the temperature in the interior of the storage container, by means of the second part 53, i.e. without removing the lid/superpositioned containers (not shown in Fig. 5b).

With reference to Fig. 5a, the second part 53 comprises a first section 65 extending, when in its correct position in the storage container, in a plane parallel to the bottom of the storage container 106 shown in Fig. 5b and a second section 67 extending in a plane parallel to the side wall 45 of the storage container 106 shown in Fig. 5b.

With reference to Figs 5a-5b, when the second section 67 of the second part 53 is placed in the second recess 49, said second section 67 is arranged flush with the surface of the side wall (55; shown in Fig. 4a) facing the exterior 106. Accordingly, there are no protruding elements to disturb container handling, in particular the vertical displacement of storage containers by means of container handling vehicles shown in Figs. 1-3b.

In a related context, said second section 67 is also arranged flush with the surface of the side wall (57; shown in Fig. 4a) facing the interior of the storage container 106. This eliminates risk of interference when items are being loaded into the container 106 or unloaded from the container 106. Also, the entire interior volume of the storage container 106 is a useful volume.

In a preferred embodiment, the first 47 and the second 49 recesses are provided in the same side wall. Typically, the first 51 and the second 53 parts are made in a material having high thermal conductivity, whereas the rest of the storage container 106 is predominantly made in a material having low thermal conductivity. Still with reference to the storage container of Figs. 4b and 5b, an insulating seal could be arranged on the rim portion of the storage container 106 in order to contribute to a stable environment in the interior of said container.

The above-discussed storage container is part of an automated, grid-based storage and retrieval system 1. An example of such a system is shown and discussed in connection with Fig. 1. With reference to Figs. 4a-5b in the context of the system as shown in Fig. 1, the proposed solution opens for adjusting temperature environment of the individual storage containers. In contrast, in solutions belonging to state of the art all storage containers of the storage and retrieval system share the same temperature environment. Here and as the storage containers are individually controlled by virtue of the present invention, a more versatile storage solution is obtained where it becomes possible to store items requiring different temperatures in the containers of a single storage and retrieval system.

Furthermore and still with reference to Fig. 1, it becomes easy to expand a conventional existing storage and retrieval system with a limited number of dedicated storage containers of the type shown in Figs. 4a-5b, for instance for storing groceries, without the need to enable this functionality for the storage containers of the entire existing storage and retrieval system.

Fig. 6 shows a second part 53 according to an alternative embodiment of the present invention, said section comprising tubes 69 for a fluidic refrigerant. The tubes 69 are embedded in the highly thermally conductive material of the second part 53. Any commercially available refrigerant may be used.

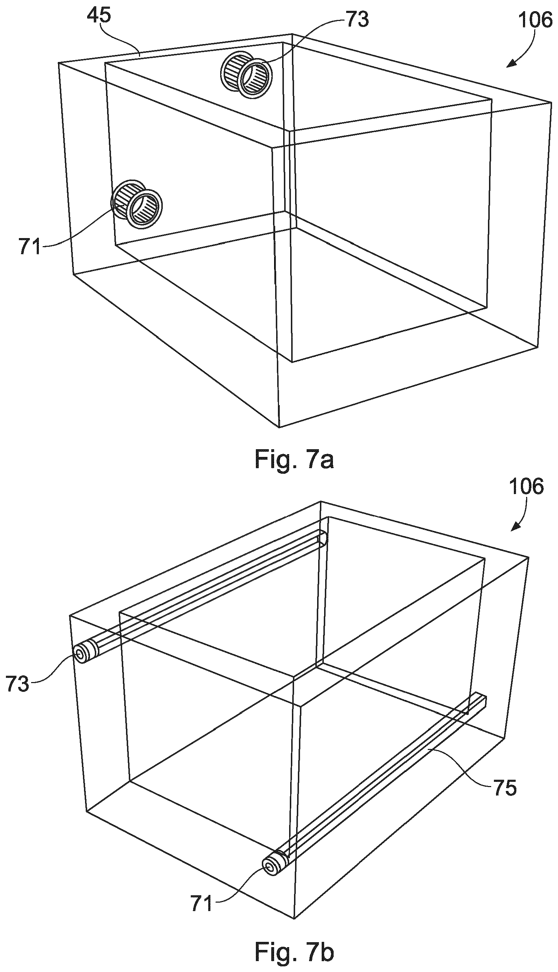

In addition to inventive features discussed in connection with Figs. 4a-6, the storage container may have additional suitable features. These will be briefly discussed in connection with Figs. 7a-9.

Fig. 7a conceptually shows a storage container 106 according to an embodiment of the present invention, a side wall 45 of the storage container comprising an air inlet 71 and an air outlet 73. The inlet 71 and the outlet 73 are arranged at different container heights. The air inlet 71 and the air outlet 73 are provided in the same side wall. In an alternative embodiment (not shown), the air outlet is provided in the lower section of the side wall and the air inlet is provided in the upper section of the same side wall.

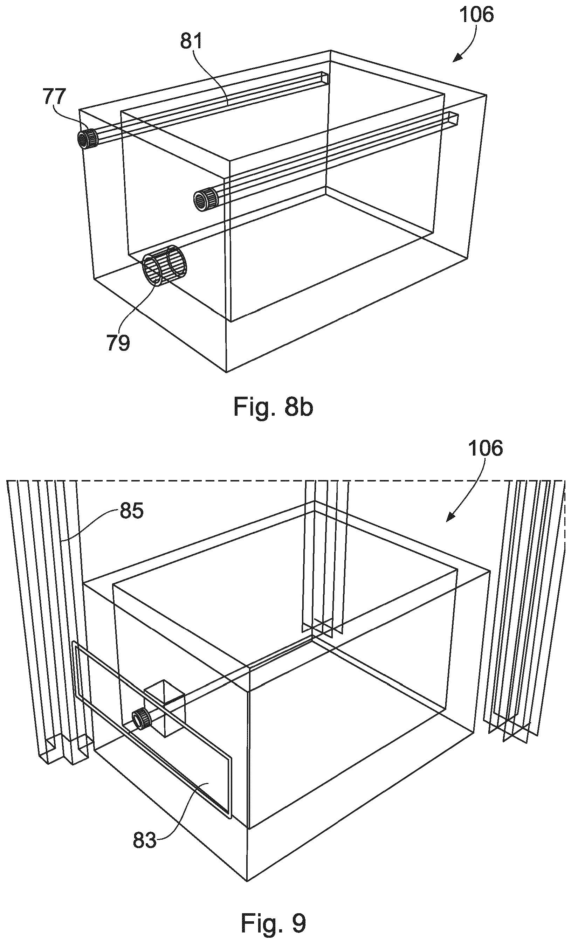

Fig. 7b shows a storage container 106 according to an embodiment of the present invention, an internal air tube 75 extending in a longitudinal direction of the storage container 106 is associated with each of the air inlet 71 and the air outlet 73 of Fig. 7a. By providing storage containers 106 of the type shown in Figs 7a-7b, a more advanced cooling/heating solution may be obtained. For instance, the injected air could have closely specified properties with respect to temperature and humidity. The properties of the exhausted air can be measured by a suitable device in order to derive differences between the injected and the exhausted airflow and to determine various parameters, typically temperature, associated with the content of the storage container. Such a measuring device is normally mounted on a bracket extending between two adjacent storage columns. The bracket will be discussed in connection with Fig. 9.

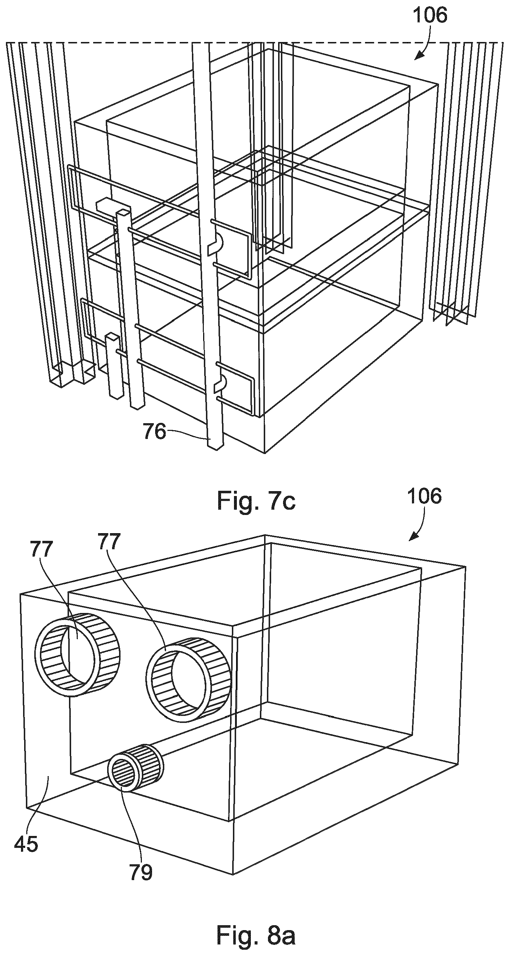

Fig. 7c conceptually shows stacked storage containers 106 according to an embodiment of the present invention, wherein external piping 76 extends to the air inlet and the air outlet of Fig. 7a. In the shown embodiment, the containers are lidless, and the super positioned container serves to seal off the interior of the lowermost container.

Fig. 8a shows a storage container 106 according to an embodiment of the present invention, wherein a side wall 45 of the storage container 106 comprises at least one light inlet 77 and a light outlet 79. Fig. 8b shows a storage container 106 according to an embodiment of the present invention, wherein a light guide 81 extending in a longitudinal direction of the storage container 106 is associated with each light inlet of Fig. 8a. Here, a light with desired spectrum can be injected into the storage container 106 via light inlets and light guides. Scattered light exits the storage container via the light outlet 79. Its properties may be determined by means of a suitably positioned sensor mounted on a bracket. The bracket will be discussed in connection with Fig. 9. Hereby, various parameters, typically temperature, associated with the content of the storage container may be determined with great precision. This information may subsequently be used for more advanced cooling/heating solutions.

Fig. 9 shows a bracket 83 extending between two adjacent storage columns (only one of these 85 is shown in Fig. 9), said bracket 83 being part of an automated, grid-based storage and retrieval system. The bracket 83 faces a side wall of the storage container 106. As briefly discussed above, the bracket 83 comprises means for functionally connecting external components with at least one of the first part, second part, the air inlet, the air outlet, the light inlet, the light outlet.

Heating/cooling devices, sensors, light or air sources can be installed in the storage grid structure of Fig. 1 in various ways. One way to install less voluminous objects is to mount them on the bracket 83 shown in connection with Fig. 9. For components not fitting onto the bracket, the space below the storage grid (104; shown in Fig. 1) may be used. Obviously, the connection interface will still need to be extended up to be installed between the storage columns. As an alternative, certain cells of the storage grid could be dedicated for accommodating controlling devices. By way of example, cells not suited for storage, such as buffer cells, cells assigned for charging of container handling vehicles or other blocked, currently empty cells, may be used. These cells could have direct connectors to the relevant storage container.

### LIST OF REFERENCE NUMBERS

- 1: Storage and retrieval system
- 45: Side wall of the storage container
- 47: First recess
- 49: Second recess
- 51: First part for gauging information regarding temperature
- 53: Second part
- 55: Surface of the side wall facing exterior of the storage container
- 57: Surface of the side wall facing interior of the storage container
- 61: First section of the first part
- 63: Second section of the first part
- 65: First section of the second part
- 67: Second section of the second part
- 69: Tubes for a fluidic refrigerant.
- 71: Air inlet
- 73: Air outlet
- 75: Internal air tube
- 76: External piping
- 77: Light inlet
- 79: Light outlet
- 81: Light guide
- 83: Bracket
- 85: Adjacent storage columns
- 100: Framework structure
- 102: Upright members of framework structure
- 104: Storage grid
- 105: Storage column
- 106: Storage container
- 106': Particular position of storage container
- 107: Stack of storage containers
- 108: Rail system
- 110: Parallel rails in first direction (X)
- 111: Parallel rails in second direction (Y)
- 112: Access opening
- 119: First port column
- 201: Container handling vehicle belonging to prior art
- 201a: Vehicle body of the container handling vehicle 201
- 201b: Drive means / wheel arrangement, first direction (X)
- 201c: Drive means / wheel arrangement, second direction (Y)
- 301: Cantilever-based container handling vehicle belonging to prior art
- 301a: Vehicle body of the container handling vehicle 301
- 301b: Drive means in first direction (X)
- 301c: Drive means in second direction (Y)
- 401: Container handling vehicle belonging to prior art
- 401a: Vehicle body of the container handling vehicle 401
- 401b: Drive means in first direction (X)
- 401c: Drive means in second direction (Y)
- X: First direction
- *Y*: Second direction
- *Z*: Third direction

## Claims

1. A storage container (106) for an automated, grid-based storage and retrieval system (1), wherein a side wall (45) of the storage container (106) comprises a first through-recess (47), said storage container (106) further comprising:
- a first part (51) for gauging information regarding temperature in the interior of the storage container (106), said first part (51) for placing in the first through-recess (47), wherein, when said first part (51) is placed in the first through-recess (47) and a section of said first part (51) is in contact with the exterior of the storage container (106), gauged information is readable from the exterior of the storage container (106), wherein a read of the gauged information regarding temperature in the interior of the storage container (106) is obtained through physical contact with the first part (51).

2. A storage container (106) according to claim 1, said storage container (106) further comprising a second recess (49) and a second part (53), wherein at least a portion of the second part (53) is suitable for placing in the second recess (49) such that, when said portion of the second part (53) is placed in the second recess (49), said second part (53) is in communication with the interior of the storage container (106), wherein said second part (53) comprises means for transferring energy between the second part (53) and the interior of the storage container (106) such that the temperature in the interior of the storage container (106) may be regulated.

3. A storage container (106) according to claim 2, wherein the first and the second recesses (47, 49) are provided in the same side wall.

4. A storage container (106) according to any of the preceding claims, wherein said first part (51) is arranged flush with the surface (55) of the side wall facing the exterior of the storage container (106), and wherein said first (51) part is arranged flush with the surface (57) of the side wall facing the interior of the storage container (106).

5. A storage container (106) according to any of the claims 2-4, wherein said second part (53) is arranged flush with the surface (55) of the side wall facing the exterior.

6. A storage container (106) according to any of the preceding claims, wherein the first part (51) comprises a first section (61) and a second section (63) protruding from the exterior-facing surface of said first section (61).

7. A storage container (106) according to any of the claims 2-6, wherein the second part (53) comprises a first section (65) extending in a plane parallel to the bottom of the storage container (106) and a second section (67) extending in a plane parallel to the side wall of the storage container (106).

8. A storage container (106) according to claim 7, wherein a cross-sectional area of the second section (67) of the second part (53) is larger than a cross-sectional area of the second section (63) of the first part (51).

9. A storage container (106) according to claim 7, wherein said first section (65) of the second part (53), said section extending in a plane parallel to the bottom of the storage container (106), comprises tubes (69) for a fluidic refrigerant.

10. A storage container (106) according to any of the preceding claims, wherein a side wall of the storage container (106) comprises an air inlet (71) and an air outlet (73) arranged at different container heights, wherein the air inlet (71) and the air outlet (73) are provided in the same side wall.

11. A storage container (106) according to claim 10, wherein an internal air tube (75) extending in a longitudinal direction of the storage container (106) is associated with each of the air inlet (71) and the air outlet (73).

12. A storage container (106) according to any of the preceding claims, wherein a side wall of the storage container (106) comprises at least one light inlet (77) and a light outlet (79).

13. A storage container (106) according to claim 12, wherein a light guide (81) extending in a longitudinal direction of the storage container is associated with each light inlet (77).

14. An automated, grid-based storage and retrieval system (1) comprising the storage container (106) in accordance with any of the claims 1-13.

15. An automated, grid-based storage and retrieval system (1) according to claim 14, wherein said system comprises a bracket (83) extending between two adjacent storage columns (85) and facing the side wall of the storage container comprising the first and the second recesses, said bracket (83) comprising means for functionally connecting external components with at least one of the first part (51), second part (53), the air inlet (71), the air outlet (73), the light inlet (77), the light outlet (79).

## Patentansprüche

1. Lagerbehälter (106) für ein automatisiertes, gitterbasiertes Lager- und Entnahmesystem (1), wobei eine Seitenwand (45) des Lagerbehälters (106) eine erste Durchgangsausnehmung (47) umfasst, wobei der Lagerbehälter (106) ferner Folgendes umfasst:
- einen ersten Teil (51) zum Erfassen von Informationen bezüglich der Temperatur im Inneren des Lagerbehälters (106), wobei der erste Teil (51) zum Platzieren in der ersten Durchgangsausnehmung (47) dient, wobei dann, wenn der erste Teil (51) in der ersten Durchgangsausnehmung (47) platziert ist und ein Abschnitt des ersten Teils (51) in Kontakt mit der Außenseite des Lagerbehälters (106) ist, erfasste Informationen von der Außenseite des Lagerbehälters (106) aus lesbar sind, wobei eine Auslesung der erfassten Informationen bezüglich der Temperatur im Inneren des Lagerbehälters (106) durch physischen Kontakt mit dem ersten Teil (51) erhalten wird.

2. Lagerbehälter (106) nach Anspruch 1, wobei der Lagerbehälter (106) ferner eine zweite Aussparung (49) und einen zweiten Teil (53) umfasst, wobei mindestens ein Abschnitt des zweiten Teils (53) zum Platzieren in der zweiten Aussparung (49) geeignet ist, so dass, wenn der Abschnitt des zweiten Teils (53) in der zweiten Aussparung (49) platziert ist, der zweite Teil (53) mit dem Inneren des Lagerbehälters (106) in Verbindung steht, wobei der zweite Teil (53) Mittel zum Übertragen von Energie zwischen dem zweiten Teil (53) und dem Inneren des Lagerbehälters (106) umfasst, so dass die Temperatur im Inneren des Lagerbehälters (106) reguliert werden kann.

3. Lagerbehälter (106) nach Anspruch 2, wobei die erste und die zweite Aussparung (47, 49) in derselben Seitenwand bereitgestellt sind.

4. Lagerbehälter (106) nach einem der vorhergehenden Ansprüche, wobei der erste Teil (51) bündig mit der Oberfläche (55) der Seitenwand angeordnet ist, die dem Äußeren des Lagerbehälters (106) zugewandt ist, und wobei der erste Teil (51) bündig mit der Oberfläche (57) der Seitenwand angeordnet ist, die dem Inneren des Lagerbehälters (106) zugewandt ist.

5. Lagerbehälter (106) nach einem der Ansprüche 2-4, wobei der zweite Teil (53) bündig mit der Oberfläche (55) der Seitenwand angeordnet ist, die dem Äußeren zugewandt ist.

6. Lagerbehälter (106) nach einem der vorhergehenden Ansprüche, wobei der erste Teil (51) einen ersten Abschnitt (61) und einen zweiten Abschnitt (63) umfasst, die aus der Oberfläche des ersten Abschnitts (61) vorstehen, die dem Äußeren zugewandt ist.

7. Lagerbehälter (106) nach einem der Ansprüche 2-6, wobei der zweite Teil (53) einen ersten Abschnitt (65), der sich in einer Ebene parallel zu dem Boden des Lagerbehälters (106) erstreckt, und einen zweiten Abschnitt (67), der sich in einer Ebene parallel zu der Seitenwand des Lagerbehälters (106) erstreckt, umfasst.

8. Lagerbehälter (106) nach Anspruch 7, wobei eine Querschnittsfläche des zweiten Abschnitts (67) des zweiten Teils (53) größer als eine Querschnittsfläche des zweiten Abschnitts (63) des ersten Teils (51) ist.

9. Lagerbehälter (106) nach Anspruch 7, wobei der erste Abschnitt (65) des zweiten Teils (53), der sich in einer Ebene parallel zu dem Boden des Lagerbehälters (106) erstreckt, Rohre (69) für ein fluidisches Kältemittel umfasst.

10. Lagerbehälter (106) nach einem der vorhergehenden Ansprüche, wobei eine Seitenwand des Lagerbehälters (106) einen Lufteinlass (71) und einen Luftauslass (73) aufweist, die in unterschiedlichen Behälterhöhen angeordnet sind, wobei der Lufteinlass (71) und der Luftauslass (73) in derselben Seitenwand bereitgestellt sind.

11. Lagerbehälter (106) nach Anspruch 10, wobei dem Lufteinlass (71) und dem Luftauslass (73) jeweils ein inneres Luftrohr (75) zugeordnet ist, das sich in einer Längsrichtung des Lagerbehälters (106) erstreckt.

12. Lagerbehälter (106) nach einem der vorhergehenden Ansprüche, wobei eine Seitenwand des Lagerbehälters (106) mindestens einen Lichteinlass (77) und einen Lichtauslass (79) aufweist.

13. Lagerbehälter (106) nach Anspruch 12, wobei jedem Lichteinlass (77) ein Lichtleiter (81) zugeordnet ist, der sich in einer Längsrichtung des Lagerbehälters erstreckt.

14. Automatisiertes, gitterbasiertes Lager- und Entnahmesystem (1), das den Lagerbehälter (106) nach einem der Ansprüche 1-13 umfasst.

15. Automatisiertes, gitterbasiertes Lager- und Entnahmesystem (1) nach Anspruch 14, wobei das System eine Halterung (83) umfasst, die sich zwischen zwei benachbarten Lagersäulen (85) erstreckt und der Seitenwand des Lagerbehälters zugewandt ist, die die erste und die zweite Aussparung aufweist, wobei die Halterung (83) Mittel zum funktionalen Verbinden externer Komponenten mit mindestens einem von dem ersten Teil (51), dem zweiten Teil (53), dem Lufteinlass (71), dem Luftauslass (73), dem Lichteinlass (77) und dem Lichtauslass (79) umfasst.

## Revendications

1. Conteneur de stockage (106) pour un système automatisé de stockage et de récupération à base de grille (1), dans lequel une paroi latérale (45) du conteneur de stockage (106) comprend un premier évidement traversant (47), ledit conteneur de stockage (106) comprenant en outre :
- une première partie (51) pour évaluer des informations concernant la température dans l'intérieur du conteneur de stockage (106), ladite première partie (51) étant destinée à être placée dans le premier évidement traversant (47), dans lequel, lorsque ladite première partie (51) est placée dans le premier évidement traversant (47) et une section de ladite première partie (51) est en contact avec l'extérieur du conteneur de stockage (106), des informations évaluées sont lisibles à partir de l'extérieur du conteneur de stockage (106), dans lequel une lecture des informations évaluées concernant la température dans l'intérieur du conteneur de stockage (106) est obtenue par le biais de contact physique avec la première partie (51).

2. Conteneur de stockage (106) selon la revendication 1, ledit conteneur de stockage (106) comprenant en outre un second évidement (49) et une seconde partie (53), dans lequel au moins une portion de la seconde partie (53) est appropriée pour être placée dans le second évidement (49) de manière telle que, lorsque ladite portion de la seconde partie (53) est placée dans le second évidement (49), ladite seconde partie (53) est en communication avec l'intérieur du conteneur de stockage (106), dans lequel ladite seconde partie (53) comprend des moyens pour transférer de l'énergie entre la seconde partie (53) et l'intérieur du conteneur de stockage (106) de manière telle que la température dans l'intérieur du conteneur de stockage (106) puisse être régulée.

3. Conteneur de stockage (106) selon la revendication 2, dans lequel les premier et second évidements (47, 49) sont prévus dans la même paroi latérale.

4. Conteneur de stockage (106) selon de quelconques des revendications précédentes, dans lequel ladite première partie (51) est agencée au ras de la surface (55) de la paroi latérale faisant face à l'extérieur du conteneur de stockage (106), et dans lequel ladite première partie (51) est agencée au ras de la surface (57) de la paroi latérale faisant face à l'intérieur du conteneur de stockage (106).

5. Conteneur de stockage (106) selon de quelconques des revendications 2 à 4, dans lequel ladite seconde partie (53) est agencée au ras de la surface (55) de la paroi latérale faisant face à l'extérieur.

6. Conteneur de stockage (106) selon de quelconques des revendications précédentes, dans lequel la première partie (51) comprend une première section (61) et une seconde section (63) faisant saillie à partir de l'extérieur-faisant face à surface de ladite première section (61).

7. Conteneur de stockage (106) selon de quelconques des revendications 2 à 6, dans lequel la seconde partie (53) comprend une première section (65) s'étendant dans un plan parallèle au fond du conteneur de stockage (106) et une seconde section (67) s'étendant dans un plan parallèle à la paroi latérale du conteneur de stockage (106).

8. Conteneur de stockage (106) selon la revendication 7, dans lequel une superficie de section transversale de la seconde section (67) de la seconde partie (53) est plus grande qu'une superficie de section transversale de la seconde section (63) de la première partie (51).

9. Conteneur de stockage (106) selon la revendication 7, dans lequel ladite première section (65) de la seconde partie (53), ladite section s'étendant dans un plan parallèle au fond du conteneur de stockage (106), comprend des tubes (69) pour un réfrigérant fluidique.

10. Conteneur de stockage (106) selon de quelconques des revendications précédentes, dans lequel une paroi latérale du conteneur de stockage (106) comprend une entrée d'air (71) et une sortie d'air (73) agencées à différentes hauteurs de conteneur, dans lequel l'entrée d'air (71) et la sortie d'air (73) sont prévues dans la même paroi latérale.

11. Conteneur de stockage (106) selon la revendication 10, dans lequel un tube d'air interne (75) s'étendant dans une direction longitudinale du conteneur de stockage (106) est associé à chacune de l'entrée d'air (71) et de la sortie d'air (73).

12. Conteneur de stockage (106) selon de quelconques des revendications précédentes, dans lequel une paroi latérale du conteneur de stockage (106) comprend au moins une entrée de lumière (77) et une sortie de lumière (79).

13. Conteneur de stockage (106) selon la revendication 12, dans lequel un conduit de lumière (81) s'étendant dans une direction longitudinale du conteneur de stockage est associé à chaque entrée de lumière (77).

14. Système automatisé de stockage et de récupération à base de grille (1) comprenant le conteneur de stockage (106) conformément à de quelconques des revendications 1 à 13.

15. Système automatisé de stockage et de récupération à base de grille (1) selon la revendication 14, dans lequel ledit système comprend un support (83) s'étendant entre deux colonnes de stockage adjacentes (85) et faisant face à la paroi latérale du conteneur de stockage comprenant les premier et second évidements, ledit support (83) comprenant des moyens pour raccorder de façon fonctionnelle des composants externes à au moins une de la première partie (51), de la seconde partie (53), de l'entrée d'air (71), de la sortie d'air (73), de l'entrée de lumière (77), de la sortie de lumière (79).
